# EUROPÄISCHE PATENTSCHRIFT

(11) **EP 2 611 604 B1**
(45) Veröffentlichungstag und Bekanntmachung des Hinweises auf die Patenterteilung: **18.04.2018**
(21) Anmeldenummer: 11752074.2
(22) Anmeldetag: 11.08.2011
(51) Int. Cl.: B32B 3/12, B32B 5/18, B32B 27/08, B32B 27/30, B32B 27/32, B32B 27/36

(54) **MEHRLAGIGE KÖRPER, UMFASSEND EINE SUBSTRATLAGE UND EINE KUNSTSTOFFLAGE**
MULTILAYER BODIES COMPRISING A SUBSTRATE LAYER AND A PLASTICS LAYER
CORPS MULTICOUCHES, COMPRENANT UNE COUCHE SUBSTRAT ET UNE COUCHE DE MATIÈRE PLASTIQUE

(30) Priorität: 31.08.2010 AT 53710 U
(43) Veröffentlichungstag der Anmeldung: 10.07.2013
(73) Patentinhaber: Senoplast Klepsch & Co. GmbH, 5721 Piesendorf (AT)
(72) Erfinder: KAPPACHER, Johann, A-5721 Piesendorf (AT); EDER, Johann, A-5661 Rauris (AT); PEIS, Thomas, A-5700 Zell am See (AT); GRUGGER, Marco, A-5700 Zell am See (AT)
(74) Vertreter: Schwarz & Partner Patentanwälte OG
(86) Internationale Anmeldenummer: PCT/AT2011/000343
(87) Internationale Veröffentlichungsnummer: WO 2012/027764

(56) Entgegenhaltungen:
- EP-A1- 0 109 388
- EP-A1- 0 673 760
- EP-A1- 1 820 641
- EP-A2- 0 110 238
- EP-A2- 0 283 861
- WO-A1-02/090109
- DE-U1- 9 404 843

## Beschreibung

Die Erfindung betrifft mehrlagige Körper, umfassend zumindest eine Substratlage, eine Kunststofflage, welche mit der Substratlage über eine Verbindungslage verbunden ist, und gegebenenfalls eine Lackschicht auf der Kunststofflage, wobei der mehrlagige Körper eine Dichte von ≤ 550 kg/m³ und einer Gesamtdicke von ≤ 12 mm aufweist. Weiters betrifft die Erfindung ein Verfahren zur Herstellung eines solchen mehrlagigen Körpers. Schließlich betrifft die Erfindung ein Möbelteil, umfassend einen mehrlagigen Körper.

Im Möbelbau werden hochglänzende Folien auf unterschiedliche Trägermaterialien als Lackersatz laminiert, um gute optische und dekorative Eigenschaften ohne Lackierung zu erhalten. Als Träger dienen unterschiedliche Basismaterialien; MDF ist der gebräuchlichste, aber auch Schaumkerne auf Basis Polyurethan oder Polystyrol, Wellstegplatten auf Basis Cellulose sowie Kunststoffwaben unterschiedlichster Materialzusammensetzung können eingesetzt werden. Ein Großteil der Möbelpaneele mit Hochglanzoberflächen wird am Markt ab einer Stärke von 12 mm angeboten. Möbeloberflächen basierend auf Paneelen dieser Bauart werden auf Gebrauchstauglichkeit gemäß existierender Normen geprüft. Eine dieser Normen ist die DIN 68861. Wichtige Anforderungen an Hochglanz Möbelpaneele sind der Glanz (ISO 2813; Ausgabe 1999-06: Determination of specular gloss of non-metallic paint films at 20°, 60° and 85°, Messgerät: Haze Gloss von Fa. Byk Gardner) und der Glanzschleier (Haze; ISO 13803; Ausgabestand 2004-09: Determination of reflection haze on paint films at 20°, Messgerät: Haze Gloss von Fa. Byk Gardner).

Diese Werte definieren die Ebenmäßigkeit der Oberfläche. Unterzieht man Möbelpaneele einer Temperaturwechselbeanspruchung, so können bei Verwendung von porösen oder in ihrer Struktur inhomogenen Trägerwerkstoffen Änderungen in den oben angeführten Oberflächengüten auftreten, welche nicht akzeptabel sind. Es ist daher wichtig auch die Oberflächengüte nach Temperaturwechseltests zu charakterisieren.

Leichtbauelemente mit hochglänzenden Oberflächen werden in der EP 0 761 135 B1 beschrieben, deren Nachteil liegt aber auch darin, dass insbesondere im Bereich der Stege an der Oberfläche Einfallstellen ersichtlich werden. Dies speziell nach Temperaturwechseltests und in Folge von unterschiedlichen thermischen Längenausdehnungsverhalten im Bereich der Kreuzungslinien der Stege mit den Gurten. Eine Dicke der Gurte von mindestens 2 mm bis 6 mm wird daher vorgeschlagen, was sich allerdings nachteilig auf das Gewicht auswirkt. Ein weiterer Nachteil ist auch das anisotrope Verhalten im Hinblick auf die Biegesteifigkeit, trotz Einbringen der erwähnten Querstege im Winkel von 45°.

Die Verwendung von anorganischen Schäumen als Ersatz von MDF (Mitteldichtefaser-) Platten als Träger und einer hochglänzenden Abdeckung aus Acrylglas wird in der EP 0 673 761 A2 gelehrt. Bei den Blähglasplatten, welche als Träger verwendet werden, handelt es sich zwar um Leichtbaumaterialien mit hoher Steifigkeit, allerdings steht dieses Material erst ab Stärken von 15 mm zur Verfügung. Die Verfahrenstechnik zur Darstellung von Verbunden dieser Art ist aufwändig und teuer, sodass sie für die Massenproduktion in der Möbelindustrie nicht applikabel erscheint. Die in der EP 0 673 761 A2 beschriebene Recyclierbarkeit ist an sich von untergeordneter Wichtigkeit, da derzeit folierte MDF Verbunde geschreddert und wieder zu neuen MDF Platten verarbeitet werden.

Auf Basis Blähglaskern gibt es auch noch Laminate mit beidseitig verklebten HPL (high pressure laminate) Platten ab 15 mm Stärke am Markt. Die Verwendung von HPL als Glanzoberfläche ergibt zwar eine sehr gute Steifigkeit, hat aber die Nachteile, dass HPL in der optischen Oberflächengüte weder an die Qualität von Glas noch von Kunststofffolien heranreicht und weiters mit einer Dichte von größer als 1,35 g/cm³ relativ schwer ist.

In der EP 0 940 249 werden Strukturlaminate genannt, die einen Kern aus duroplastischem Schaum mit zähen Außenschichten aus mehrschichtig aufgebauten Metall-Polyethylenterephthalatverbunden darstellen. Die Außenschichten erfüllen keine dekorativen Zwecke, vielmehr schützen sie den Schaumkern vor physikalischer Zerstörung.

Die DE 10 2006 007 869 beschreibt Verbunde, in welchen eine hochglänzende Folie mittels eines Klebers auf verschiedene Substrate u. a. auch auf sogenannte Leichtbau- oder Wabenplatten kaschiert wird.

In der WO 2008/135252 A1 werden Leichtbauelemente beschrieben, deren Längsstirnseiten dauerhaft geschützt und versiegelt werden, sodass eine normgerechte und dauerhafte Haftung der Deckschicht auf der Profilschicht gegeben ist. Es wird beschrieben, dass die Deck- und Profilleiste aus thermoplastischen Materialien bestehen kann und es von Vorteil ist, wenn sich diese in einem reduziertem Dichtebereich bewegen, um eine ausgewogenes Preis- Leistungsverhältnis zu erlangen. Bezüglich der optischen Oberflächeneigenschaften, der Dichte und der Gesamtstärke des fertigen Verbundes gibt es keine Angaben.

EP 1 820 388 A1 offenbart ein Verfahren zum Kaschieren einer transparenten Kunststofflage auf eine Substratlage in Form eines Holzwerkstoffsubstrats, wobei eine Verbindungslage in Form eines Klebstoffs die Kunststofflage mit der Substratlage verbindet.

In EP 0 109 388 A1 wird eine Stegplatte mit Deckschicht und dazwischen liegender Ausgleichschicht beschrieben.

EP 0 110 238 A2 zeigt eine Hohlkammertafel, die beidseitig beschichtet ist.

EP 0 283 861 A2 zeigt eine Dekorfolie für diverse Tafeln (Spanplatten, Verbundplatten etc.).

WO 02/090109 A1 offenbart einen mehrlagigen Körper, umfassend zumindest eine Substratlage und eine Kunststofflage, welche mit der Substratlage über eine Verbindungslage verbunden ist.

In zunehmendem Masse werden in der Möbelindustrie Leichtbaumaterialien eingesetzt. Die Gründe dafür liegen einerseits in kommerziellen Vorteilen, andererseits ergeben sich aus dem Verhältnis Bauteilsteifigkeit zu Gewicht weitere konstruktive Vorzüge. Für den Stärkenbereich über 12 mm stehen eine große Anzahl an verschiedenen Leichtbauvarianten zur Verfügung, mit abnehmender Stärke reduziert sich die zur Verfügung stehende Auswahl an Leichtbaumaterialien drastisch.

Zusätzlich herrscht ein Bedarf an Verbunden mit hochglänzenden ebenmäßigen Oberflächen, welche im Stärkenbereich unter 12 mm liegen, um in bestimmten Anwendungen (z. B. kontrastgefärbte Füllungen für Paneele, Ersatz von Glas basierend auf Leichtbau mit hochglänzenden, sehr ebenmäßigen, glasähnlichen Oberflächengüten) Verbundwerkstoffe vorliegen zu haben.

Der Erfindung lag daher die Aufgabe zugrunde, mehrschichtige Leichtbauelemente mit einer Dichte kleiner 550 kg/m³ bei einer Gesamtstärke von kleiner oder gleich 12 mm mit hochglänzenden sehr ebenmäßigen Oberflächengüten bei möglichst hoher Steifigkeit zu entwickeln, welche auch die Anforderungen der vorliegenden Möbelnormen erfüllt.

Gelöst wird diese Aufgabe durch einen mehrlagigen Körper, umfassend zumindest eine Substratlage, eine Kunststofflage, welche mit der Substratlage über eine Kleberschicht verbunden ist und gegebenenfalls eine Lackschicht, die auf die Kunststofflage aufgebracht ist, wobei der mehrlagige Körper eine Dichte von ≤ 550 kg/m³ und einer Gesamtdicke von ≤ 12 mm aufweist, welcher dadurch gekennzeichnet ist, dass die Kunststofflage ein ABS/PMMA Coextrudat oder ein PET/PETG Coextrudat, vorzugsweise mit einer Kratzfestlackbeschichtung, umfasst, wobei die Oberfläche des mehrlagigen Körpers
1. einen Glanz von maximal 92, vorzugsweise maximal 80, GLE gemessen nach ÖNORM EN ISO 2813 (Ausgabe 1999-06) bei einem Beobachtungswinkel von 20° und
2. einen Glanzschleier von maximal 80, vorzugsweise maximal 60, gemessen nach ÖNORM EN ISO 13803 (Ausgabe 2004-09) bei 20° (Hazemessung bei 20°),
aufweist.

Besonders bevorzugt kann vorgesehen sein, dass die Oberfläche weiters
1. einen Longwave Wert von max. 40, vorzugsweise maximal 10,
2. einen Shortwave von maximal 40, vorzugsweise maximal 10
aufweist.

Die Messung von Longwave und Shortwave kann mit dem Messgeräte Wave-Scan Dual ® der BYK-Gardner GmbH (Lausitzer Straße 8, 82538 Geretsried) ermittelt werden. Das Verfahren wird im Detail in der DE 103 39 227 A1 beschrieben, wobei zum besseren Verständnis auch auf die DE 41 27 215 A1 verwiesen wird. Für die Charakterisierung des Messgeräte Wave-Scan Dual® wird auf die DE 10 2004 037 040 A1 verwiesen. Die Verfahrensbedingungen lassen sich aus der DE 103 39 227 A1 ableiten, sodass auf diese und die beiden anderen Schriften hierin Bezug genommen wird und auf die dortigen Ausführungen verwiesen werden darf. In der DE 103 39 227 A1 werden zur Filterung 5 Wellenlängenbereiche Wa, Wb, Wc, Wd und We genannt. Der Shortwave und der Longwave entsprechen dabei etwa den Bereichen Wb und Wd, d.h. Wellenlängen von 0,3 bis 1,2 mm für den Shortwave und 1,2 bis 12 mm für den Longwave.

Die relevanten Oberflächenparameter sind dabei an der Oberfläche der Kunststofflage bzw. gegebenenfalls an der Oberfläche der Lackschicht, die auf der Kunststofflage aufgebracht ist, zu ermitteln.

Die DE 10 2006 007 869 beschreibt zwar Verbunde, in welchen eine hochglänzende Folie mittels eines Klebers auf verschiedene Substrate u. a. auch auf sogenannte Leichtbau- oder Wabenplatten kaschiert wird. Die DE 10 2006 007 869 vernachlässigt aber, dass
- weitere physikalische Parameter erforderlich sind um die Ebenmäßigkeit einer Hochglanz Oberfläche zu definieren und
- während des Verfahrens der Lamination eine Veränderung der optischen Oberflächeneigenschaften eintritt.

Beim Stand der Technik wird somit einerseits der Ausgangszustand der Folien in unausreichendem Masse definiert, andererseits die Oberflächengüte am fertigen Produkt als für die Kunden relevante Größe unberücksichtigt gelassen.

Die Kunststofflage umfasst entweder ein ABS/PMMA Coextrudat oder ein PET/PETG Coextrudat. Letzteres kann vorzugsweise mit einer Kratzfestbeschichtung in Form einer Lackschicht versehen sein.

All die beschriebenen Kunststofflagen bringen gute optische Eigenschaften bei hoher Stabilität mit sich, sodass die Gesamtdicke im Verbund gering gehalten werden kann.

Die Erfindung beruht auf der Erkenntnis, dass die Faktoren Glanz und Glanzschleier (Haze), besonders aber noch weitere Werte wie der sogenannte Longwave und der Shortwave entscheidende Faktoren für die Beurteilung der Oberflächegüte sind. Die Kombination aller vier Werte mit jeweils bestimmten definierten Wertebereichen liefert ein besonders ebenmäßiges Erscheinungsbild der Oberfläche. In der nachfolgenden Tabelle sind einige bekannte Kunststofffolien anhand dieser Parameter erläutert. Bekannte hochglänzende Oberflächen von Folien im Möbelmarkt können z. B. durch folgende Eigenschaften gemäß Tabelle 1 charakterisiert werden:

**Tabelle 1.: Zusammenfassende Charakteristika von hochglänzenden Oberflächenfolien**

| **Folie** | **1** | **2** | **3** | **4** | **5** |
|---|---|---|---|---|---|
| **Glanz** | 78,3 - 80,50 | 74,7 - 75,1 | 86,4 - 87,5 | 75 - 77,6 | 87,8 - 90,6 |
| **Haze** | 0,1 - 8,7 | 29,6 - 35,7 | 0,6 - 2,5 | 72,1 - 92,6 | 1,1 - 2,4 |
| **LW** | 0,06 - 0,1 | 3,6 - 3,8 | 1,1 - 4,7 | 1,3 - 2,3 | 0,5 - 0,8 |
| **SW** | 0,1 - 0,98 | 2,2 - 2,7 | 0,1 - 0,9 | 10,1 - 18,7 | 0,4 - 0,7 |

| | | | | | |
|---|---|---|---|---|---|
| Folie 1: ABS-PMMA Coextrudat, Senosan™ AM1500X Folie 2: PET Coextrudat, Senosan™ G1500X 3D Verformbar Folie 3: PET Coextrudat, Senosan™ G1500X 1D Verformbar Folie 4: ABS kratzfest beschichtet Folie 5: PET Coextrudat | | | | | |

Glanz in GLE (Glanzeinheiten) nach ÖNORM EN ISO 2813; Ausgabe 1999-06: Determination of specular gloss of non-metallic paint films at 20°, 60° and 85°, Messgerät: Haze Gloss der Fa. Byk Gardner, Beobachtungswinkel: 20°
Haze: gemessen nach ÖNORM EN ISO 13803; Ausgabestand 2004-09: Determination of reflection haze on paint films at 20°, Messgerät: Haze Gloss von Fa. Byk Gardner
LW: Longwave, gemessen mit Messgerät Wave Scan Plus der Fa. Byk Gardner
SW: Shortwave, gemessen mit Messgerät Wave Scan Plus der Fa. Byk Gardner

Damit die Dichte des erfindungsgemäßen mehrlagigen Körpers gering ist, muss die Substratlage eine geringere Dichte als der Körper selbst, da die meisten (ungeschäumten) Kunststoffe eine Dichte von > 550 kg/m³, meist von > 900 kg/m³ aufweisen. Niedrige Dichte bei hoher Stabilität weisen beispielsweise Wabenkerne auf, sodass es vorteilhaft ist, wenn die Substratlage einen Wabenkern, einen einseitig kaschierten Wabenkern oder einen zweiseitig kaschierten Wabenkern umfasst.

Der - gegebenenfalls kaschierte - Wabenkern ist bevorzugt aus Papier, Kunststoff oder Kunststoff und Papier aufgebaut. Die Hohlräume der Waben können auch geschäumt sein, z.B. mit einem geschäumten Kunststoff, um die Stabilität zu erhöhen.

Niedrige Dichte bei hoher Stabilität weisen beispielsweise auch Kunststoffschäume auf, sodass es vorteilhaft ist, wenn die Substratlage einen geschäumten Kunststoff umfasst.

Auch sogenannte Stegplatten weisen eine geringe Dichte bei hoher Stabilität auf, sodass es vorteilhaft ist, wenn die Substratlage eine Stegplatte, vorzugsweise eine Kunststoffstegplatte, umfasst.

Weiters kann vorgesehen sein, dass die der Kunststofflage abgewandte Seite der Substratlage wenigstens eine weitere Lage aufweist. Dabei ist es günstig, wenn die wenigstens eine weitere Lage mit der Substratlage verklebt ist. Dabei kann vorgesehen sein, dass die wenigstens eine weitere Lage mehrschichtig ausgebildet ist.

Je nach Anforderungsprofil kann es günstig sein, wenn die wenigstens eine weitere Lage Papier, Kunststoff, Metall oder Mischungen daraus umfasst.

Ein vorteilhaftes Einsatzgebiet derartiger Körper ist die Möbelindustrie, sodass die Erfindung in einem Aspekt ein Möbelteil, umfassend einen solchen mehrlagigen Körper, betrifft.

Die Erfindung betrifft weiters ein Verfahren zur Herstellung eines mehrlagigen Körpers der vorgenannten Art, welches dadurch gekennzeichnet ist, dass eine Substratlage mit einer Dichte von < 550 kg/m³ und eine Kunststofflage mit einer Dichte von > 550 kg/m³, vorzugsweise > 900 kg/m³ miteinander verklebt werden, wobei die Dicke der Kunststofflage und der Substratlage derart gewählt sind, dass bei der mehrlagige Körper bei einer Gesamtdicke von ≤ 12 mm eine Dichte von ≤ 550 kg/m³ aufweist, wobei die Oberfläche der Kunststofflage einen Glanz von maximal 99, vorzugsweise maximal 85, GLE gemessen nach ÖNORM EN ISO 2813 (Ausgabe 1999-06) bei einem Beobachtungswinkel von 20° und einen Haze von maximal 80, vorzugsweise von maximal 60, gemessen nach ÖNORM EN ISO 13803 (Ausgabe 2004-09) bei 20° aufweist. Die weiteren Verfahrensschritte ergeben sich logischerweise aus den oben genannten Anforderungen an den Körper.

Besonders bevorzugt kann vorgesehen sein, dass die Oberfläche weiters
1. einen Longwave Wert von max. 40, vorzugsweise maximal 10 und
2. einen Shortwave von maximal 40, vorzugsweise maximal 10
aufweist.

Weitere Vorteile und Details der Erfindung werden anhand der Figuren, der Figurenbeschreibung sowie der nachfolgenden Erläuterungen der Erfindung beschrieben.

Es zeigen schematisch
- Fig. 1: einen erfindungsgemäßen Körper mit zwei Lagen, die über eine Verbindungslage miteinander verbundenen sind und
- Fig. 2: einen erfindungsgemäßen Körper mit drei Lagen, die über zwei Verbindungslagen miteinander verbunden sind.

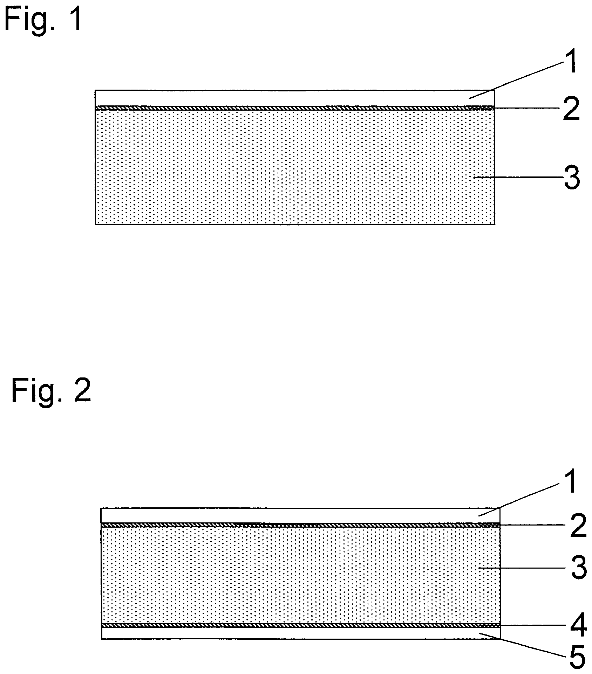

In der Fig. 1 ist ein mehrlagiger Körper, umfassend eine Substratlage 3 und eine Kunststofflage 1 gezeigt. Substratlage 3 und Kunststofflage sind über die Verbindungslage 2 miteinander verbunden. In Fig. 2 ist ebenfalls ein mehrlagiger Körper, umfassend eine Substratlage 3 und eine Kunststofflage 1 gezeigt. Dieser Körper weist zusätzlich eine weitere Lage 5 auf, die mit der der Kunststofflage 1 abgewandten Seite der Substratlage 3 über eine zweite Verbindungslage 4 verbunden ist. Der genaue Aufbau und die genauen Werte der einzelnen Lagen und Schichten sind im nachfolgenden Text anhand von Ausführungsbeispielen erläutert,

Die Kunststofflage 1 weist eine hochglänzende Oberfläche auf und ist ein- oder mehrschichtig ausgebildet. Die Verbindungslage 2 umfasst einen geeigneten Klebstoff, der dazu in der Lage ist, die Kunststofflage 1 mit der Substratlage 3 zu verbinden. Die genaue Zusammensetzung der Verbindungslage 2 ergibt sich also für den Fachmann nach Wahl der Lagen 1 und 3. Die Verbindungslage 2 kann mit einer Armierung, beispielsweise einer Glasfaserverstärkung versehen sein, um die Stabilität zu erhöhen. Die Substratlage 3 weist eine möglichst niedrige Dichte auf. In der Regel besteht sie aus Leichtbaumaterialien, wie z.B. aus Papierwaben, Kunststoffwaben, Kunststoffstegplatten, duro- oder thermoplastischen Schäumen usw. (siehe auch weiter unten).

Im Beispiel der Fig. 2 ist zusätzlich eine rückseitige Abdeckungslage 5 vorgesehen. Diese ist über eine zweite Verbindungslage 4 mit der Substratlage 3 verbunden. Auch diese Verbindungslage 4 umfasst einen geeigneten Klebstoff. Dieser muss natürlich dazu in der Lage sein, die rückseitige Abdeckungslage 5 mit der Substratlage 3 zu verbinden. Wiederum kann eine Armierung, beispielsweise eine Glasfaserverstärkung, vorgesehen sein.

Als Kunststofflage 1, welche für den erfindungsgemäßen Aufbau Verwendung finden können, sind in der Regel Mehrschichtverbunde aus verschiedenen Polymeren wobei die Darstellung dieser durch Coextrusion, Colamination (auch unter zu Hilfenahme von Klebstoffen) oder Beschichtung auf ein- oder mehrschichtige Strukturen erfolgen kann. Die Oberflächen der Kunststofflage 1 werden entweder durch einen kratzfesten Kunststoff oder eine entsprechende Lackschicht gebildet. Folien dieser Art liegen im Stärkenbereich zwischen 0,2 bis 1,5 mm, für die Erfindung bevorzugt liegen die Stärken zwischen 0,3 bis 1,1 mm, im Besonderen bevorzugt zwischen 0,5 bis 0,9 mm. Die Folien können an der Rückseite mit einem Primer versehen sein um im Verbund eine verbesserte Verklebung zu gewährleisten.

Folgende Substrate mit niedrigen Dichten können im erfindungsgemäßen Aufbau beispielsweise als Substratlage 3 Verwendung finden:
- Papierwabenkerne, ohne Kaschierung sowie ein- und zweiseitig kaschiert, wobei die Kaschierung in der Stärke auch asymmetrisch ausgeführt sein kann. Zum Beispiel kann auf einer Seite Papier mit einer Grammatur von 15 g auf der gegenüberliegenden Seite mit 30 g appliziert sein. Hersteller von Papierwaben sind die u. a. die Firmen SWAP (Sachsen) GmbH, Yamaton Paper GmbH oder Econcore.
- Kunststoffwabenkerne, ohne Kaschierung sowie ein- und zweiseitig kaschiert, wobei die Kaschierung in der Stärke auch asymmetrisch ausgeführt sein kann. Hersteller von Kunststoffwaben der bevorzugten Art sind die Firmen Thermopal GmbH oder Econcore.
- Thermo- und duroplastische Schäume. Hersteller von Schäumen sind u. a. die Firmen Arcan Airtex, Simona AG, Brett Martin oder Foamalite.
- Stegplatten mit symmetrischem oder asymmetrischem Aufbau.

Als Klebstoffe für die Verbindungslage 2 werden üblicherweise Schmelzkleber verwendet, dies in Form von thermoplastischen und/oder reaktiven Systemen. Diese Klebstoffe können mittels Düsen-, Rakel- oder Walzenauftragsverfahren aufgebracht werden. Auch andere Verfahren sind denkbar. Hersteller von Klebern sind z. B. die Firmen Jowat AG, Henkel KGA oder SIKA.

Oben angeführte Folien, Kleber und Leichtbau Substrate können zu mehrschichtigen Verbunden gemäß Fig. 1 und 2 zusammengeführt werden wobei z.B. die Zusammensetzung gemäß Tabelle 2 gewählt werden kann.

**Tabelle 2: Erfindungsgemäße mehrschichtige Aufbauten:**

| Lage | Aufbau gemäß Fig. 1 | Aufbau gemäß Fig. 2 |
|---|---|---|
| 1 | • Kunststoff Folien | • Kunststoff Folien |
| | • Verbund Kunststoff/Dekorpapier | • Verbund Kunststoff/Dekorpapier |
| 2 | • Kleber | • Kleber |
| | • Kleber mit Armierung | • Kleber mit Armierung |
| 3 | • Papierwabenkerne (uU ein oder zweiseitig kaschiert) | • Papierwabenkerne (uU ein oder zweiseitig kaschiert) |
| | • Kunststoffwabenkerne (uU ein oder zweiseitig kaschiert) | • Kunststoffwabenkerne (uU ein oder zweiseitig kaschiert) |
| | • Kunststoffstegplatte | • Kunststoffstegplatte |
| | • Kunststoffschaum (Duroplast oder Thermoplast) | • Kunststoffschaum (Duroplast oder Thermoplast) |
| 4 | | • Kleber |
| | | • Kleber mit Armierung |
| 5 | | • Kunststoff Folien |
| | | • Verbund Kunststoff/Dekorpapier |
| | | • Metallfolien |
| | | • Papierfolien |

Gegenstände der Erfindung sind nun mehrlagige Körper in den Strukturen der Fig. 1 und 2 in Kombination mit Tabelle 2, welche im Wesentlichen aus einer Substratlage 3 als Träger mit niedriger Dichte bestehen und die wiederum mittels einer Verbindungslage 2 an der Oberseite mit einer hochglänzenden Kunststofflage 1 versehen werden. In gleichem Maße sind mehrlagige Körper Gegenstand der Erfindung auf welchen an beiden Seiten des Substratlage 3 als Träger mittels Verbindungslage 4 Mehrschichtfolien, Papiere, modifizierte Papiere oder Metallfolien etc aufgebracht sind, wobei zumindest eine Oberfläche in Hochglanzversion ausgeführt ist. Beide Konstruktionen zeigen erfindungsgemäß eine maximale Stärke von 12 mm, eine maximale Dichte von 550 kg/m³ sowie folgende optische Eigenschaften gemessen an der Oberfläche des Mehrschichtverbundes der jeweiligen Kunststofflage 1:
- einen Glanz von maximal 99, vorzugsweise maximal 85, GLE gemessen nach ÖNORM EN ISO 2813; Ausgabe 1999-06: Determination of specular gloss of non-metallic paint films at 20°, 60° and 85° bei einem Beobachtungswinkel von 20°
- einen Haze von maximal 80, vorzugsweise maximal 60, gemessen nach ÖNORM EN ISO 13803; Ausgabestand 2004-09: Determination of reflection haze on paint films at 20°
- einen Longwave Wert von max. 40 gemessen mit Messgerät Wave Scan Plus der Fa. Byk Gardner
- einen Shortwave von maximal 40 gemessen mit Messgerät Wave Scan Plus der Fa. Byk Gardner

Im Rahmen der Entwicklung konnte festgestellt werden, dass das o. a. Anforderungsprofil in sich widersprüchlich ist: Während man eine homogene Oberflächenqualität am Mehrschichtverbund erreicht, indem man bei den laminierten Folien höhere Stärkenbereiche verwendet, ist dieser Schritt was die Dichte des Verbundkörpers betrifft kontraproduktiv: Mit steigender Stärke der verwendeten Folien steigt auch die Dichte.

Der Grund für die Reduktion der Oberflächengüte mit abnehmender Folienstärke liegt in der Struktur des Substrates mit welchem die Folie verklebt wird: im Rahmen der Untersuchungen wurde festgestellt, das neben den Verarbeitungsbedingungen, die erforderlich sind um die Folien mit dem Substrat zu verkleben, auch die Zellstruktur und -größe des Substrates einen maßgeblichen Einfluss auf die Oberflächengüte des Mehrschichtverbundes haben. Die Oberflächengüte kann dabei über unterschiedliche Parameter beeinflusst werden:
- Mit zunehmender Stärke der verwendeten Folie nimmt die Oberflächengüte der Verbunde zu.
- Je nach verwendeter Folie und Kleber muss die Temperatur in der Folie im Laminationsprozesses so tief wie möglich gehalten werden um ein Durchprägen der Waben- oder Schaumstruktur des Substrates zu unterbinden. Dieser Effekt resultiert aus der Steifigkeit der thermoplastischen Folie die mit zunehmender Temperatur abnimmt. Je kühler und damit steifer die Folie auflaminiert werden kann umso weniger transferieren die Unebenheiten des Substrates an die Oberfläche und beeinträchtigen die Oberflächengüte. Als weiterer temperaturbeeinflusster Parameter ist die thermische Längenausdehnung zu nennen: Je höher die Verarbeitungstemperatur gewählt wird umso größer ist der Schrumpf der Folie über der Zellstruktur nach dem Laminierprozess. Dieser Schrumpf führt zu minimalen Verwerfungen der Oberfläche welche sich aber sehr nachteilig auf das optische Erscheinungsbild auswirken. Die Ebenmäßigkeit der hochglänzenden Verbundoberfläche nimmt mit steigender Verarbeitungstemperatur ab.
- Verwendet man kaschierte Substrate also z. B. Wabenstrukturen an denen eine oder beide Seiten bereits vorab gedeckt sind kann mit einer deutlich besseren Oberfläche gerechnet werden. Ein Nachteil in der Verwendung dieser Kerne liegt im höheren Preis der kaschierten Wabenstrukturen gegenüber den reinen Wabenkernen.

### Beispiel 1:

Verbundaufbau:
Lage 1: Senosan™ AM1500X in Stärke 0,80 mm; Dichte: 1,08 g/cm³
Lage 2: Kleberschicht 40 g/m²; Hersteller: Henkel Dorus; Type Purmelt QR 4663 Stärke: 0,036 mm; Dichte: 1,20 g/cm³
Lage 3: Kunststoffwabenkern aus gefülltem PP, assymetrisch aufgebaut mit beidseitiger Kaschierung aus verstärktem PP, Stärke Rückseite 0,7 mm, Stärke Kaschierung Oberseite 0,3 mm, Kunststoffwabenkern mit Stärke 2,0 mm; Gesamtstärke: 3 mm; Dichte: 267 kg/m³; Hersteller Kaysersberg, Type Akyboard
Gesamtverbundstärke: 3,84 mm
Gesamtverbunddichte: 444,0 kg/m³
Senosan™ AM1500X ist ein coextrudierter Mehrschichtverbund auf Basis ABS mit einer Deckschicht aus PMMA

Für alle Beispiele gilt:
GLE: Glanzeinheiten gemessen nach ÖNORM EN ISO 2813; Ausgabe 1999-06: Determination of specular gloss of non-metallic paint films at 20°, 60° and 85°. Messgerät: Haze Gloss der Fa. Byk Gardner
Haze: gemessen nach ÖNORM EN ISO 13803; Ausgabestand 2004-09: Determination of reflection haze on paint films at 20°, Messgerät: Haze Gloss von Fa. Byk Gardner
LW: Longwave, gemessen mit Messgerät Wave Scan Plus der Fa. Byk Gardner
SW: Shortwave, gemessen mit Messgerät Wave Scan Plus der Fa. Byk Gardner
Dichte: berechnet in kg/ m³
Dicke: Angabe in mm

### Beispiel 2:

Verbundaufbau:
Lage 1: Deckschicht Senosan™ G1500X 3D in Stärke 0,50 mm; Dichte: 1,36 g/cm³
Lage 2: Kleberschicht 40 g/m²; Kleber: Jowatherm- Reaktant 603.77 (PUR Hotmelt Reaktiv), Hersteller: Fa. Jowat AG; Stärke: 0,036 mm; Dichte: 1,12 g/cm³
Lage 3: Offener, nicht kaschierter Papierwabenkern; Type Torhex Papierkern; Hersteller: Econcore Economic Core Technologies; Stärke: 5 mm; Dichte: 0,065 g/cm³
Gesamtverbundstärke: 5,54 mm
Gesamtverbunddichte: 189 kg/m³

Senosan™ G1500X ist ein kratzfestbeschichteter Mehrschichtverbund auf Basis PET und PETG. Die Kratzfestschicht wird durch ein thermisch vernetzendes Lacksystem auf Basis PUR gebildet. Die Kratzfestschicht ist thermisch duktil.

### Beispiel 3:

Verbundaufbau:
Lage 1: Deckschicht Senosan™ G1500X 1D in Stärke 0,35 mm; Dichte: 1,36 g/cm³
Lage 2: Kleberschicht 40 g/m²; Kleber: Jowatherm- Reaktant 603.77 (PUR Hotmelt Reaktiv), Hersteller: Fa. Jowat AG; Stärke: 0,036 mm; Dichte: 1,12 g/cm³
Lage 3: Offener, nicht kaschierter Papierwabenkern; Type Torhex Papierkern; Hersteller: Econcore Economic Core Technologies; Stärke: 5 mm; Dichte: 0,065 g/cm³
Lage 4: Kleberschicht 40 g/m²; Kleber: Jowatherm- Reaktant 603.77 (PUR Hotmelt Reaktiv), Hersteller: Fa. Jowat AG; Stärke: 0,036 mm; Dichte: 1,12 g/cm³
Lage 5: Papier, Hersteller: Arjo Wiggings, dekoriert, Stärke: 0,120 mm; Flächengewicht: 140g/m² Gesamtverbundstärke: 5,54 mm
Gesamtverbunddichte: 184,3 kg/m³

Senosan™ G1500X ist ein kratzfestbeschichteter Mehrschichtverbund auf Basis PET und PETG. Die Kratzfestschicht ist thermisch nicht duktil.

### Beispiel 4:

Verbundaufbau:
Lage 1: Senosan™ AM1500X in Stärke 0,75 mm; Dichte: 1,08 g/cm³
Lage 2: Kleberschicht 40 g/m²; Hersteller: Henkel Dorus; Type Purmelt QR 4663 Stärke: 0,036 mm; Dichte: 1,20 g/cm³
Lage 3: Kunststoffwabenkern aus gefülltem PP, symmetrisch aufgebaut mit beidseitiger Kaschierung aus verstärktem PP, Stärke jeweils 0,7 mm, Kunststoffwabenkern mit Stärke 3,8 mm; Gesamtstärke: 5,2 mm; Dichte: 231 kg/m³; Hersteller Kaysersberg, Type Akyboard
Lage 4: Kleberschicht 40 g/m²; Hersteller: Henkel Dorus; Type Purmelt QR 4663 Stärke: 0,036 mm; Dichte: 1,20 g/cm³
Lage 5: Senosan™ AM1500X in Stärke 0,75 mm ; Dichte: 1,08 g/cm³
Gesamtverbundstärke: 6,77 mm
Gesamtverbunddichte: 428,5 kg/m³

Senosan™ AM1500X ist ein coextrudierter Mehrschichtverbund auf Basis ABS mit einer Deckschicht aus PMMA

**Tabelle 3: Zusammenfassung der Messergebnisse (Optische und Physikalische Eigenschaften):**

| **Gemessenen Werte** | **GLE** | **Haze** | **LW** | **SW** | **Dichte** | **Dicke** |
|---|---|---|---|---|---|---|
| **Beispiel 1** | 63,6 | 2,3 | 1,97 | 0,67 | 444,0 | 3,84 |
| **Beispiel 2** | 73,2 | 37,3 | 5,7 | 3,8 | 189 | 5,54 |
| **Beispiel 3** | 96,8 | 135,5 | 6,9 | 1,89 | 184,3 | 5,54 |
| **Beispiel 4** | 79,4 | 5,1 | 2,8 | 0,8 | 428,5 | 6,77 |

GLE: Glanzeinheiten gemessen nach ÖNORM EN ISO 2813; Ausgabe 1999-06: Determination of specular gloss of non-metallic paint films at 20°, 60° and 85°, Messgerät: Haze Gloss von Fa. Byk Gardner
Haze: gemessen nach ÖNORM EN ISO 13803; Ausgabestand 2004-09, Determination of reflection haze on paint films at 20°,Messgerät: Haze Gloss von Fa. Byk Gardner
LW: Longwave, gemessen mit Messgerät Wave Scan Plus der Fa. Byk Gardner
SW: Shortwave, gemessen mit Messgerät Wave Scan Plus der Fa. Byk Gardner
Dichte: berechnet in kg/m³
Dicke: Angabe in mm

## Patentansprüche

1. Mehrlagiger Körper, umfassend zumindest eine Substratlage (3), eine Kunststofflage (1), welche mit der Substratlage (3) über eine Verbindungslage (2) verbunden ist, und gegebenenfalls eine Lackschicht auf der Kunststofflage (1), wobei der mehrlagige Körper eine Dichte von ≤ 550 kg/m³ und einer Gesamtdicke von ≤ 12 mm aufweist, **dadurch gekennzeichnet, dass** die Kunststofflage (1) ein ABS/PMMA Coextrudat oder ein PET/PETG Coextrudat, vorzugsweise mit einer Kratzfestlackbeschichtung, umfasst, wobei die Oberfläche des mehrlagigen Körpers
a. einen Glanz von maximal 92, vorzugsweise maximal 80, GLE gemessen nach ISO 2813 (Ausgabe 1999-06) bei einem Beobachtungswinkel von 20° und
b. einen Glanzschleier von maximal 80, vorzugsweise maximal 60, gemessen nach ISO 13803 (Ausgabe 2004-09) bei 20°
aufweist.

2. Mehrlagiger Körper nach Anspruch 1, **dadurch gekennzeichnet, dass** die Oberfläche weiters
a. einen Longwave Wert von max. 40, vorzugsweise maximal 10 und
b. einen Shortwave von maximal 40, vorzugsweise maximal 10
aufweist.

3. Mehrlagiger Körper nach Anspruch 1 oder Anspruch 2, **dadurch gekennzeichnet, dass** die Substratlage (3) einen Wabenkern, einen einseitig kaschierten Wabenkern oder einen zweiseitig, gegebenenfalls asymmetrisch, kaschierten Wabenkern umfasst, wobei der - gegebenenfalls kaschierte - Wabenkern vorzugsweise aus Papier, Kunststoff oder Kunststoff und Papier aufgebaut ist.

4. Mehrlagiger Körper nach Anspruch 1 oder Anspruch 2, **dadurch gekennzeichnet, dass** die Substratlage (3) einen geschäumten Kunststoff umfasst.

5. Mehrlagiger Körper nach Anspruch 1 oder Anspruch 2, **dadurch gekennzeichnet, dass** die Substratlage (3) eine Stegplatte, vorzugsweise eine Kunststoffstegplatte, umfasst.

6. Möbelteil, umfassend einen mehrlagigen Körper nach einem der Ansprüche 1 bis 5.

7. Verfahren zur Herstellung eines mehrlagigen Körpers nach einem der Ansprüche 1 bis 5, **dadurch gekennzeichnet, dass** eine Substratlage (3) mit einer Dichte von < 550 kg/m³ und eine Kunststofflage (1) miteinander verklebt werden, wobei die Kunststofflage (1) als Mehrschichtkörper, als Coextrudat ausgebildet ist, wobei die Kunststofflage (1) ein ABS/PMMA Coextrudat oder ein PET/PETG Coextrudat umfasst, wobei die Kunststofflage (1) eine Dichte von > 550 kg/m³, vorzugsweise > 900 kg/m³ aufweist, , wobei gegebenenfalls auf die Kunststofflage (1) eine Lackschicht aufgebracht wird, wobei die Dicke der Kunststofflage (1) und der Substratlage (3) derart gewählt sind, dass bei der mehrlagige Körper bei einer Gesamtdicke von ≤ 12 mm eine Dichte von ≤ 550 kg/m³ aufweist, wobei die Oberfläche des mehrlagigen Körpers einen Glanz von maximal 99, vorzugsweise von maximal 85, GLE gemessen nach ÖNORM EN ISO 2813 Ausgabe 1999-06 bei einem Beobachtungswinkel von 20° und einen Haze von maximal 80, vorzugsweise maximal 60, gemessen nach ÖNORM EN ISO 13803 Ausgabe 2004-09 bei 20° aufweist.

8. Verfahren nach Anspruch 7, **dadurch gekennzeichnet, dass** die Oberfläche weiters
a. einen Longwave Wert von max. 40, vorzugsweise maximal 10 und
b. einen Shortwave von maximal 40 gemessen, vorzugsweise maximal 10
aufweist.

9. Verfahren nach Anspruch 7 oder Anspruch 8, **dadurch gekennzeichnet, dass** die Kunststofflage (1) PMMA oder PET/PETG aufweist.

10. Verfahren nach einem der Ansprüche 7 bis 9, **dadurch gekennzeichnet, dass** die Kunststofflage (1) mehrschichtig ausgebildet ist, coextrudiert wird, wobei ABS und PMMA zur Kunststofflage (1) coextrudiert werden oder PET/PETG zur Kunststofflage (1) coextrudiert werden und, optional mit einer Kratzfestlackbeschichtung versehen werden.

## Claims

1. A multilayer body, comprising at least one substrate layer (3), one plastic layer (1), which is connected to the substrate layer (3) via one connection layer (2), and optionally a lacquer layer on the plastic layer (1), the multilayer body having a density of ≤ 550 kg/m³ and a total thickness of ≤ 12 mm, **characterized in that** the plastic layer (1) comprises a ABS/PMMA co-extrudate or a PET/PETG co-extrudate, preferably with a scratch-resistant lacquer coating, wherein the surface of the multilayer body has
a. a gloss value of max. 92, preferably max. 80, GU measured according to ISO 2813 (edition 1999-06) at a viewing angle of 20°, and
b. a haze of max. 80, preferably max. 60, measured according to ISO 13803 (edition 2004-09) at 20°.

2. The multilayer body according to claim 1, **characterized in that** the surface additionally has
a. a longwave value of max. 40, preferably max. 10, and
b. a shortwave value of max. 40, preferably max. 10.

3. The multilayer body according to claim 1 or claim 2, **characterized in that** the substrate layer (3) has a honeycomb core, a honeycomb core laminated on one side, or a honeycomb core laminated, optionally asymmetrically, on two sides, the - optionally laminated - honeycomb core being constructed of paper, plastic or plastic and paper.

4. The multilayer body according to claim 1 or claim 2, **characterized in that** the substrate layer (3) comprises a foamed plastic.

5. The multilayer body according to claim 1 or claim 2, **characterized in that** the substrate layer (3) comprises a multi-wall sheet, preferably a multi-wall plastic sheet.

6. A furniture part comprising a multilayer body according to any one of the claims 1 to 5.

7. A method for manufacturing a multilayer body according to any one of the claims 1 to 5, **characterized in that** a substrate layer (3) with a density of < 550 kg/m³ and a plastic layer (1) are bonded together, the plastic layer (1) being formed as a multilayer body, a co-extrudate, the plastic layer (1) comprising a ABS/PMMA co-extrudate or a PET/PETG co-extrudate, the plastic layer (1) having a density of > 550 kg/m³, preferably > 900 kg/m³, wherein optionally a varnish coating is applied on the plastic layer (1), wherein the thickness of the plastic layer (1) and of the substrate layer (3) are selected in such a way that the multilayer body has a density of ≤ 550 kg/m³ at a total thickness of ≤ 12 mm, wherein the surface of the multilayer body has a gloss value of max. 99, preferably max. 85, GU measured according to ÖNORM EN ISO 2813 edition 1999-06 at a viewing angle of 20° and a haze of max. 80, preferably max. 60, measured according to ÖNORM EN ISO 13803 edition 2004-09 at 20°.

8. The method according to claim 7, **characterized in that** the surface additionally has
a. a longwave value of max. 40, preferably max. 10, and
b. a shortwave value of max. 40, preferably max. 10.

9. The method according to claim 7 or claim 8, **characterized in that** the plastic layer (1) comprises PMMA or PET/PETG.

10. The method according to any one of the claims 7 to 9, **characterized in that** the plastic layer (1) has a multilayer structure, is co-extruded, wherein ABS and PMMA are co-extruded to the plastic layer (1) or PET/PETG are co-extruded to the plastic layer (1) and are optionally provided with a scratch-resistant lacquer coating.

## Revendications

1. Corps multicouche, comprenant au moins une couche de substrat (3), une couche de matière plastique (1), qui est liée à la couche de substrat (3) par une couche de liaison (2) et éventuellement une couche de laque sur la couche de matière plastique (1), dans lequel le corps multicouche présente une densité de ≤ 550 kg/m³ et une épaisseur totale de ≤ 12 mm, **caractérisé en ce que** la couche de matière plastique (1) comprend un co-extrudat ABS/PMMA ou un co-extrudat PET/PETG, de préférence avec un revêtement de laque résistant aux éraflures, dans lequel la surface du corps multicouche
a. présente une brillance de maximum 92, de préférence maximum 80 GLE, mesurée selon ISO 2813 (édition 1999-06) sous un angle d'observation de 20° et
b. un voile de maximum 80, de préférence maximum 60, mesuré selon ISO 13803 (édition 2004-09) sous 20°.

2. Corps multicouche selon la revendication 1, **caractérisé en ce que** la surface présente en outre
a. une valeur Longwave de maximum 40, de préférence maximum 10 et
b. une valeur Shortwave de maximum 40, de préférence maximum 10.

3. Corps multicouche selon la revendication 1 ou la revendication 2, **caractérisé en ce que** la couche de substrat (3) comprend un noyau alvéolaire, un noyau alvéolaire doublé sur un côté ou un noyau alvéolaire doublé sur les deux côtés, éventuellement de façon asymétrique, dans lequel le noyau alvéolaire - éventuellement doublé - est constitué de préférence de papier, de matière plastique, ou de matière plastique et de papier.

4. Corps multicouche selon la revendication 1 ou la revendication 2, **caractérisé en ce que** la couche de substrat (3) comprend une matière plastique expansée.

5. Corps multicouche selon la revendication 1 ou la revendication 2, **caractérisé en ce que** la couche de substrat (3) comprend une plaque d'âme, de préférence une plaque d'âme en matière plastique.

6. Partie de meuble, comprenant un corps multicouche selon l'une quelconque des revendications 1 à 5.

7. Procédé de fabrication d'un corps multicouche selon l'une quelconque des revendications 1 à 5, **caractérisé en ce que** l'on colle l'une à l'autre une couche de substrat (3) ayant une densité de < 550 kg/m³ et une couche de matière plastique (1), dans lequel la couche de matière plastique (1) est formée par un corps multicouche sous forme de co-extrudat, dans lequel la couche de matière plastique (1) comprend un co-extrudat ABS/PMMA ou un co-extrudat PET/PETG, dans lequel la couche de matière plastique (1) présente une densité de > 550 kg/m³, de préférence > 900 kg/m³, dans lequel on dépose éventuellement une couche de laque sur la couche de matière plastique (1), dans lequel les épaisseurs de la couche de matière plastique (1) et de la couche de substrat (3) sont choisies de telle manière que le corps multicouche présente une densité de ≤ 550 kg/m³ pour une épaisseur totale de ≤ 12 mm, dans lequel la surface du corps multicouche présente une brillance de maximum 99, de préférence de maximum 85, GLE mesurée selon la norme autrichienne ÔNORM EN ISO 2813, édition 1999-06 sous un angle d'observation de 20° et un voile de maximum 80, de préférence de maximum 60, mesuré selon la norme autrichienne ÔNORM EN ISO 13803, édition 2004-19, sous 20°.

8. Procédé selon la revendication 7, **caractérisé en ce que** la surface présente en outre
a. une valeur Longwave de maximum 40, de préférence maximum 10 et
b. une valeur Shortwave de maximum 40, de préférence maximum 10.

9. Procédé selon la revendication 7 ou la revendication 8, **caractérisé en ce que** la couche de matière plastique (1) présente du PMMA ou du PET/PETG.

10. Procédé selon l'une quelconque des revendications 7 à 9, **caractérisé en ce que** la couche de matière plastique (1) est réalisée à plusieurs couches, est co-extrudée, dans lequel on co-extrude du ABS et du PMMA pour la couche de matière plastique (1) ou on co-extrude du PET/PETG pour la couche de matière plastique (1) et, facultativement, on la munit d'un revêtement de laque résistant aux éraflures.
